# EUROPEAN PATENT APPLICATION

(11) **EP 4 571 466 A1**
(43) Date of publication of application: **18.06.2025**
(21) Application number: 23856117.9
(22) Date of filing: 27.04.2023
(51) Int. Cl.: G06F 3/01

(54) **APPLICATION CARD ADJUSTMENT METHOD AND APPARATUS, AND TERMINAL DEVICE AND STORAGE MEDIUM**

(30) Priority: 26.08.2022 CN 202211037857
(71) Applicant: Honor Device Co., Ltd., Shenzhen, Guangdong 518040 (CN)
(72) Inventor: ZHANG, Taolin, Shenzhen, Guangdong 518040 (CN); LI, Jingwei, Shenzhen, Guangdong 518040 (CN); JIAO, Junting, Shenzhen, Guangdong 518040 (CN)
(74) Representative: Goddar, Heinz J.
(86) International application number: PCT/CN2023/091308
(87) International publication number: WO 2024/041023

(57) **Abstract**

Embodiments of this application provide an application card adjustment method and apparatus, a terminal device, and a storage medium, and are applied to the field of terminal technologies. The method includes: obtaining, in response to a first slide operation gesture triggered by a user on a first application card in a current display interface, a size adjustment policy of the first application card; determining a target display size of the first application card based on a current display size of the first application card and the size adjustment policy; and displaying the first application card at the target display size in the current display interface. **In** this application, without sequentially selecting an application and a display size of an application card in a menu content display interface, a first slide operation gesture is directly triggered on an application card to indicate a terminal device to automatically adjust a display size of the application card based on a current display size of the application card and a size adjustment policy, simplifying a procedure of adjusting the display size of the application card.

## Description

This application claims priority to Chinese Patent Application No. 202211037857.1, filed with the China National Intellectual Property Administration on August 26, 2022 and entitled "APPLICATION CARD ADJUSTMENT METHOD AND APPARATUS, TERMINAL DEVICE, AND STORAGE MEDIUM", which is incorporated herein by reference in its entirety.

### TECHNICAL FIELD

This application relates to the field of terminal technologies, and in particular, to an application card adjustment method and apparatus, a terminal device, and a storage medium.

### BACKGROUND

With the continuous development of intelligent mobile terminal and software technologies, it has become more popular to browse various information by using a client, an application, a web page, a mini program, and an application card in a mobile terminal. The application card presents relevant information of a target application in a card form. A user can obtain required target application information only by directly browsing an application card corresponding to a target application on a display screen of a mobile terminal, without entering an application page.

In the related art, a plurality of display sizes are preset for some application cards. When a user needs to change an initial display size of any application card in a current display desktop, the user needs to long press a menu button to enter a menu content display interface, select a submenu "more service cards", select and add an application card of a target display size of the application from the submenu, and then return to the current display desktop. Further, the application card of the initial display size is deleted from the current display desktop, and the application card of the target size is added to a corresponding position.

However, the foregoing technique has a complex operation procedure for changing a display size of an application card, resulting in low efficiency of changing the display size of the application card.

### SUMMARY

Embodiments of this application provide an application card setting method and apparatus, a terminal device, and a storage medium, which can quickly and effectively adjust a display size of an application card. Technical solutions are as follows:

According to a first aspect, an embodiment of this application provides an application card adjustment method. The method includes:
obtaining, in response to a first slide operation gesture triggered by a user on a first application card in a current display interface, a size adjustment policy of the first application card;
determining a target display size of the first application card based on a current display size of the first application card and the size adjustment policy; and
displaying the first application card at the target display size in the current display interface.

Based on this, in this application, when a display size of an application card is adjusted, without triggering a menu button and sequentially selecting an application and a display size of an application card in a menu content display interface, a first slide operation gesture is directly triggered on an application card to indicate a terminal device to obtain a size adjustment policy corresponding to the application card based on the first slide operation gesture and automatically adjust a display size of the application card based on a current display size of the application card and the size adjustment policy. Therefore, a procedure of adjusting the display size of the application card is simplified, and efficiency of adjusting the display size of the application card is improved, so that user operation experience is better.

In a possible implementation, the obtaining, in response to a first slide operation gesture triggered by a user on a first application card in a current display interface, a size adjustment policy of the first application card includes:
obtaining an operation-policy correspondence between a card operation gesture and a card adjustment policy; and
determining the size adjustment policy corresponding to the first application card based on the first slide operation gesture triggered by the user on the first application card and the operation-policy correspondence.

In other words, in this application, after the operation-policy correspondence is preset, an adjustment requirement of the user for the application card may be quickly and accurately determined based on an operation gesture triggered by the user on the application card. When detecting the first slide operation gesture on the first application card, the terminal device may quickly obtain the size adjustment policy of the first application card based on the operation-policy correspondence, to accurately and effectively respond to a user operation and improve user experience.

In a possible implementation, the determining a target display size of the first application card based on a current display size of the first application card and the size adjustment policy includes:
obtaining a display size switching sequence of the first application card; and
determining the target display size of the first application card based on the current display size of the first application card and the display size switching sequence.

In this implementation, the user may initiate, based on the first slide operation gesture, a procedure of switching the display size of the first application card. In other words, in response to the first slide operation gesture of the user, the terminal device determines, based on the display size switching sequence, the target display size that the user needs to switch to, which has a simple operation.

In addition, the user can visually understand a display effect of the first application card of each display size in a repeated switching manner, so that the target display size selected after switching meets an actual requirement of the user, and user operation experience is better.

In a possible implementation, the determining the target display size of the first application card based on the current display size of the first application card and the display size switching sequence includes:
determining an intermediate display size of the first application card in response to the first slide operation gesture triggered by the user on the first application card and the display size switching sequence, and displaying the first application card at the intermediate size; and
determining the intermediate display size as the target display size of the first application card if a size determining operation triggered by the user is detected on the first application card displayed at the intermediate display size.

In this implementation, after the terminal device switches from the current display size to the intermediate display size based on the display size switching sequence in response to the first slide operation gesture of the user, the user determines whether there is a need to use the intermediate size as the target display size after switching. In this case, by interacting with the user and determining the display size, the target display size after switching meets an actual display size adjustment requirement of the user, and an adjustment result is more accurate.

In a possible implementation, the determining a target display size of the first application card based on a current display size of the first application card and the size adjustment policy includes:
presenting a plurality of candidate display cards at preset display sizes for the first application card; and
determining a target display card corresponding to the first application card from the plurality of candidate display cards, where a display size of the target display card is the target display size of the first application card.

To be specific, the terminal device presents the plurality of candidate display cards at the preset display sizes for the first application card in a global preview manner in response to the first slide operation gesture triggered by the user on the first application card, and then determines the target display card and the target display size based on the plurality of candidate display cards. Therefore, a procedure of adjusting the display size of the first application card is simplified.

In addition, the plurality of candidate display cards are simultaneously presented, which facilitates the user to visually understand display effects of the first application card of different display sizes and comprehensively compare various display sizes, so that the selection of the target display size is more in line with a real thought of the user, effectively avoiding deviation between a selection result and an actual requirement, improving efficiency of browsing the display size of the first application card, and enhancing user operation experience.

In a possible implementation, the displaying the first application card at the target display size in the current display interface includes:
switching the first application card to the target display card, to display the target application card in the current display interface.

In this case, after the target application card is determined in the global preview manner, the target display card can be directly displayed in a card display region corresponding to the first application card in the current display interface. Therefore, quick adjustment of the display size is implemented by directly switching the entire application card.

In a possible implementation, the determining a target display size of the first application card based on a current display size of the first application card and the size adjustment policy includes:
obtaining a display size adjustment amount of the first application card based on the first slide operation gesture triggered by the user on the first application card; and
determining the target display size of the first application card based on the current display size of the first application card and the display size adjustment amount.

In this implementation, in response to the first slide operation gesture triggered by the user on the first application card, the terminal device adaptively adjusts the display size of the first application card to the target display size based on the current display size and the display size adjustment amount determined based on the first slide operation gesture of the user. Therefore, a procedure of adjusting the display size of the first application card is simplified. In addition, by adaptively adjusting the display size, the user can flexibly and effectively adjust the display size of the first application card based on an actual requirement, so that the adjusted target display size is in line with a real thought of the user, enhancing user operation experience.

In a possible implementation, the first slide operation gesture includes a horizontal slide operation and/or a vertical slide operation, and the display size adjustment amount includes a horizontal size adjustment amount and/or a vertical size adjustment amount; and
the obtaining a display size adjustment amount of the first application card based on the first slide operation gesture triggered by the user on the first application card includes:
obtaining the horizontal size adjustment amount of the first application card based on the horizontal slide operation triggered by the user on the first application card;
   and/or
obtaining the vertical size adjustment amount of the first application card based on the vertical slide operation triggered by the user on the first application card.

To be specific, based on the first slide operation gesture, the display size of the first application card may be adaptively adjusted only in a horizontal direction, or only in a vertical direction, or in both the horizontal direction and the vertical direction, making the adjustment more flexible.

In a possible implementation, the displaying the first application card at the target display size in the current display interface includes:
obtaining a card display region corresponding to the first application card at the target display size;
determining a to-be-moved icon from a plurality of application icons in the current display interface based on the card display region; and
performing moving processing on the to-be-moved icon based on a preset icon moving rule, to display the first application card at the target display size in the card display region.

In this case, when the first application card is displayed at the target display size in the current display interface, moving processing needs to be performed on the to-be-moved icon based on the card display region determined based on the target display size. Therefore, it can be ensured that the first application card and the application icon that are displayed in the current display interface are clearly displayed and do not obscure or cover each other.

In a possible implementation, the to-be-moved icon includes a first movable icon and a second movable icon; the first movable icon is an application icon corresponding to the card display region, and the second movable icon includes at least one application icon other than the first movable icon in the current display interface; and
the performing moving processing on the to-be-moved icon based on a preset icon moving rule includes:
adding a blank display interface between the current display interface and a next display interface, where the current display interface and the next display interface are adjacent display interfaces; and
moving the first movable icon or the second movable icon to the blank display interface for display.

In this case, the to-be-moved icon is displayed by adding a display interface, which does not affect a display sequence of application icons in other display interfaces in the terminal device, and has a simple operation. In addition, original application icon deployment habits of the user in other display interfaces are maintained, making user experience better.

In a possible implementation, the to-be-moved icon includes a third movable icon; the third movable icon includes a plurality of application icons located below and after the card display region in the current display interface; and
the performing moving processing on the to-be-moved icon based on a preset icon moving rule includes:
sequentially moving the third movable icon backward based on a preset moving direction priority, to display the third movable icon in the current display interface and/or a next display interface, where
the moving direction priority indicates that a horizontal movement priority is higher than a vertical movement priority.

In this case, the to-be-moved icon is displayed by sequentially moving the application icons backward, so that the application icons in the terminal device are still neatly displayed in an unchanged display sequence after the display size of the first application card is adjusted, which is in line with an original application icon browsing habit of the user.

In a possible implementation, the method further includes:
obtaining, in response to a second slide operation gesture triggered by the user on the first application card in the current display interface, an application switching policy of the first application card; and
switching the first application card to a second application card based on the application switching policy, where the first application card and the second application card correspond to different applications.

Based on this, in this application, when an application type of an application card is adjusted, without triggering a menu button and selecting a second application for switching in a menu content display interface, the second slide operation gesture is directly triggered on the first application card to indicate the terminal device to obtain the application switching policy corresponding to the application card based on the second slide operation gesture and automatically switch the first application card to a second application card based on the application switching policy, to display the second application card in the current display interface. Therefore, a procedure of adjusting the application type of the application card is simplified, and efficiency of adjusting the application type of the application card is improved, so that user operation experience is better.

In a possible implementation, if the current display size of the first application card is a maximum preset display size or a minimum preset display size, the method further includes:
obtaining, in response to the first slide operation gesture triggered by the user on the first application card in the current display interface, an application switching policy of the first application card; and
switching the first application card to a second application card based on the application switching policy, where the first application card and the second application card correspond to different applications.

To be specific, when the user adjusts the current display size of the first application card by triggering the first slide operation gesture on the first application card, if the current display size or the adjusted target display size of the first application card is equal to the maximum preset display size or the minimum preset display size, the user no longer performs a display size switching operation after triggering the first slide operation gesture, but switches the first application card to the second application card based on the application switching policy. In this case, based on the first slide operation gesture, not only the display size of the application card can be adjusted, but also the application type of the application card can be adjusted, making adjustment of the application card more flexible and an adjustment effect better.

According to a second aspect, an embodiment of this application provides an application card adjustment apparatus. The apparatus includes:
an obtaining module, configured to obtain, in response to a first slide operation gesture triggered by a user on a first application card in a current display interface, a size adjustment policy of the first application card;
a determining module, configured to determine a target display size of the first application card based on a current display size of the first application card and the size adjustment policy; and
a presentation module, configured to display the first application card at the target display size in the current display interface.

According to a third aspect, an embodiment of this application provides a terminal device, including a memory and a processor.

The memory is configured to store a computer program.

The processor is configured to read the computer program from the memory and execute the computer program to implement steps of the application card adjustment method according to any method embodiment in the first aspect.

According to a fourth aspect, an embodiment of this application provides a computer-readable storage medium, storing a computer program. The computer program is executed by a processor to implement steps of the application card adjustment method according to any method embodiment in the first aspect.

According to a fifth aspect, an embodiment of this application provides a computer program product. The computer program product includes a computer program. When the computer program product is run on the foregoing terminal device, the terminal device performs steps of the application card adjustment method according to any method embodiment in the first aspect.

### BRIEF DESCRIPTION OF DRAWINGS

FIG. 1 is a schematic diagram of a structure of a terminal device according to an exemplary embodiment of this application;
FIG. 2 is a schematic flowchart of an application card adjustment method according to an exemplary embodiment of this application;
FIG. 3 is a schematic flowchart of determining a target display size according to an exemplary embodiment of this application;
FIG. 4A, FIG. 4B, FIG. 4C, and FIG. 4D are schematic diagrams of display size switching according to an exemplary embodiment of this application;
FIG. 5 is another schematic flowchart of determining a target display size according to an exemplary embodiment of this application;
FIG. 6A and FIG. 6B are other schematic diagrams of display size switching according to an exemplary embodiment of this application;
FIG. 7 is still another schematic flowchart of determining a target display size according to an exemplary embodiment of this application;
FIG. 8A, FIG. 8B, and FIG. 8C are still other schematic diagrams of display size switching according to an exemplary embodiment of this application;
FIG. 9 is a schematic flowchart of displaying an application card according to an exemplary embodiment of this application;
FIG. 10A, FIG. 10B, FIG. 10C, and FIG. 10D are schematic diagrams of displaying an application card according to an exemplary embodiment of this application;
FIG. 11A, FIG. 11B, and FIG. 11C are other schematic diagrams of displaying an application card according to an exemplary embodiment of this application;
FIG. 12A, FIG. 12B, FIG. 12C, and FIG. 12D are still other schematic diagrams of displaying an application card according to an exemplary embodiment of this application;
FIG. 13 is a schematic flowchart of another application card adjustment method according to an exemplary embodiment of this application;
FIG. 14 is a schematic diagram of a structure of an application card adjustment apparatus according to an exemplary embodiment of this application; and
FIG. 15 is a schematic diagram of a structure of another application card adjustment apparatus according to an exemplary embodiment of this application.

### DESCRIPTION OF EMBODIMENTS

To make the objectives, technical solutions, and advantages of this application clearer, the following further describes the technical solutions of this application in detail with reference to the accompanying drawings and embodiments.

Before the application card adjustment method provided in embodiments of this application is explained and described, an application scenario of embodiments of this application is first described.

With the continuous development of intelligent mobile terminal and software technologies, it has become more popular to browse various information by using a client, an application, a web page, a mini program, and an application card in a terminal device. In a display interface of a terminal device, applications usually have two layouts: an application icon layout and an application card layout.

In the application icon layout, an application icon is tapped to enter an application interface of the application (which may be a main interface of the application), to check and edit detailed information in the application. In this layout, when a user needs to obtain detailed information in an application, the user has to enter a relevant application interface and then select required content step by step based on display content of the application interface, which has cumbersome operation steps that cannot be implemented directly.

In the application card layout, a core function of an application is placed on a card for presentation. Display content in an application card is associated with content displayed by a started application associated with the application card. In this case, when a user wants to obtain information in an application, the user directly browses an application card corresponding to the application without entering an application page, to obtain the required application information.

Usually, an application card provides various display sizes for a user for setting, to clearly display relevant information of an application to meet a browsing requirement of the user.

For any application card presented in a display interface of a terminal device, when a user wants to adjust a display size of the application card, an adjustment procedure is as follows: First, a menu button is long pressed to enter a menu content display interface. A submenu "more service cards" is tapped in the menu content display interface. A corresponding application is selected from the submenu, and an application card of a target display size of the application is added. Then, a current display desktop is returned. An application card of an initial display size is deleted from the current display desktop, and the application card of the target size is added to a corresponding card display region.

However, the foregoing display size adjustment procedure requires the user to perform a plurality of tap selection operations, which has a complex operation procedure, resulting in low efficiency of adjusting the display size of the application card, affecting user operation experience.

Based on this, this application provides an application card adjustment method and apparatus, a terminal device, and a storage medium, which directly adjusts a current display size of an application card based on a corresponding size adjustment policy in response to an operation gesture triggered by a user on the application card, to display the application card at a target display size. Therefore, by simplifying user operation steps, efficiency of adjusting the display size of the application card is improved, so that user operation experience is better.

Certainly, adjusting the display size of the application card by triggering a first slide operation gesture on the application card is only one application scenario of this application, and this application may also be applied to another adjustment scenario of display status or display content of the application card. Details are not described herein.

Further, after the application scenario of embodiments of this application is described, an implementation environment of this application is described.

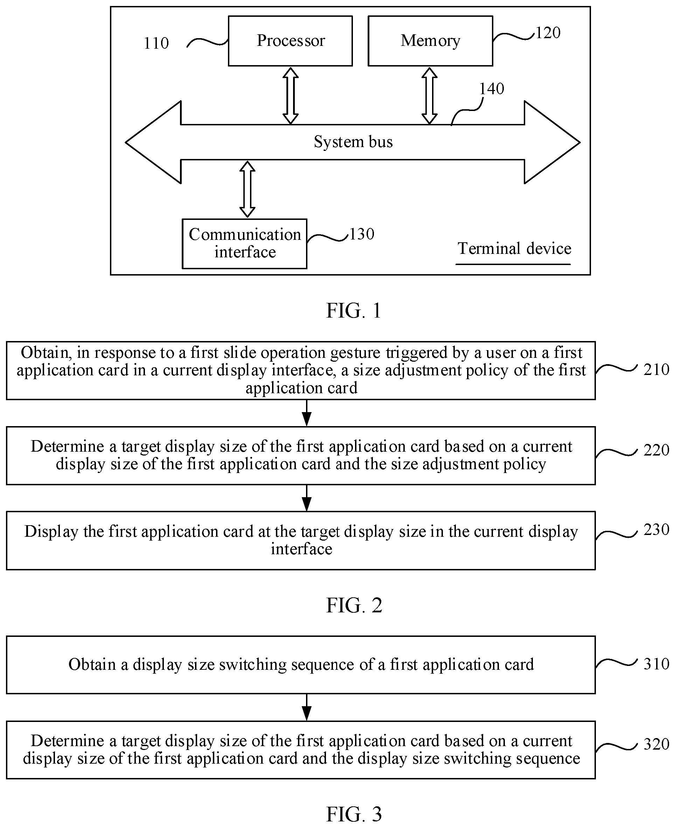

In an exemplary embodiment, the application card adjustment method provided in embodiments of this application may be applied to a terminal device. As shown in FIG. 1, the terminal device includes at least one processor 110, a memory 120, a communication interface 130, and a system bus 140.

The processor 110 may be a general-purpose central processing unit (Central Processing Unit, CPU), a network processor (Network Processor, NP), or a microprocessor; or may be one or more integrated circuits for implementing the technical solutions of this application, such as an application-specific integrated circuit (Application-Specific Integrated Circuit, ASIC), a programmable logic device (Programmable Logic Device, PLD), or a combination thereof. The PLD may be a complex programmable logic device (Complex Programmable Logic Device, CPLD), a field-programmable gate array (Field-Programmable Gate Array, FPGA), a generic array logic (Generic Array Logic, GAL), or any combination thereof.

The memory 120 may be a read-only memory (Read-Only Memory, ROM) or another type of static storage device that can store static information and instructions, or may be a random access memory (Random Access Memory, RAM) or another type of dynamic storage device that can store information and instructions, or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compressed optical disc, a laser disc, an optical disc, a digital versatile optical disc, or a Blu-ray disc), a magnetic disk storage medium or another magnetic storage device, or any another medium that can be used to carry or store desired program code in the form of an instruction or a data structure and that can be accessed by a computer, but not limited thereto.

Optionally, the memory 120 may exist independently, and is connected to the processor 110 through the system bus 140; or the memory 120 may be integrated with the processor 110.

The communication interface 130 is configured to communicate with another device or communication network. The communication interface 130 may include a wired communication interface, and may also include a wireless communication interface. The wired communication interface may be an Ethernet interface, and the Ethernet interface may be an optical interface, an electrical interface, or a combination thereof. The wireless communication interface may be a wireless local area network (Wireless Local Area Network, WLAN) interface, a cellular network communication interface, or a combination thereof.

The system bus 140 is configured to transfer information between the foregoing components. The system bus 140 may be classified into an address bus, a data bus, a control bus, and the like. For ease of representation, the system bus is represented by using only one double-arrow thick line in the figure, which does not indicate that there is only one bus or only one type of bus.

Optionally, the processor 110 may include one or more CPUs.

Optionally, the terminal device may alternatively include a plurality of processors 110. Each of these processors may be a single-core processor (single-CPU), or may be a multi-core processor (multi-CPU). The processor herein may be one or more devices or circuits, and/or a processing core configured to process data (for example, computer program instructions).

Optionally, the terminal device may further include an output device and an input device (which are not shown in FIG. 1). The output device communicates with the processor 110, and may display information in a plurality of manners. For example, the output device may be a liquid crystal display (Liquid Crystal Display, LCD), a light emitting diode (Light Emitting Diode, LED) display device, a cathode ray tube (Cathode Ray Tube, CRT) display device, a projector (projector), or the like. The input device communicates with the processor 110, and may receive input information or instructions from a user in a plurality of manners. For example, the input device may be a mouse, a keyboard, a touchscreen, or a sensor device.

In addition, in some embodiments, the memory 120 is configured to store a computer program for performing the technical solutions of this application, and the processor 110 may execute the computer program stored in the memory 120. For example, the terminal device may implement the application card adjustment method provided in embodiments of this application by the processor 110 calling and executing the computer program in the memory 120.

The following describes in detail the technical solutions of embodiments of this application and how to resolve the foregoing technical problems according to the technical solutions of embodiments of this application with reference to the accompanying drawings. The following several specific embodiments may be combined with each other, and the same or similar concepts or processes may not be described repeatedly in some embodiments. It is to be noted that, an execution body of an application card adjustment method provided in embodiments of this application may be the terminal device shown in FIG. 1, or may be an application card adjustment apparatus. The apparatus may be implemented as all or a part of a processor in the terminal device by software, hardware, or a combination thereof. Apparently, the described embodiments are some rather than all of embodiments of this application.

In a method embodiment, as shown in FIG. 2, an embodiment of this application provides an application card adjustment method, to adjust a display size of a first application card. The method is applicable to the terminal device shown in FIG. 1, and includes the following steps:

Step 210: Obtain, in response to a first slide operation gesture triggered by a user on a first application card in a current display interface, a size adjustment policy of the first application card.

In terms of a slide manner, the first slide operation gesture may include a light touch and slide operation and a long press and slide operation. In terms of a slide direction, the first slide operation gesture may include a horizontal slide operation and a vertical slide operation. The horizontal slide operation includes a left slide operation and a right slide operation. The vertical slide operation includes an up slide operation and a down slide operation. In this embodiment of this application, the first slide operation gesture may be one slide operation gesture or a combination of a plurality of slide operation gestures listed above, which is not limited.

For example, the terminal device is a mobile phone. The mobile phone may usually include a plurality of display interfaces, such as a main desktop interface, a leftmost home screen interface, and at least one application interface. In this embodiment of this application, the current display interface is any display interface of an application card configured in the mobile phone, and the first application card is a card of any application installed in the terminal device.

It should be understood that the main desktop interface is usually the first desktop page, and the main desktop page may be configured when leaving the factory or may be configured based on a preference of a user; and the leftmost home screen interface is a display interface on a left side of the main desktop interface, and is configured to provide a user with services such as searching, application suggestions, quick services, application cards, and situational intelligence. This is not limited in embodiments of this application.

Further, the first slide operation gesture is an operation formed by the user sliding a touchscreen of the terminal device. In this case, after detecting the first slide operation gesture for the first application card in the current display interface, the terminal device determines the size adjustment policy of the first application card in response to the first slide operation gesture.

When the size adjustment policy is determined based on the first slide operation gesture, the size adjustment policy of the first application card may be determined in real time based on a machine learning model, or the size adjustment policy of the first application card may be determined based on a preset correspondence, or the size adjustment policy of the first application card may be inputted autonomously by the user. This is not limited in embodiments of this application.

In a possible implementation, an implementation process of step 210 may include: obtaining an operation-policy correspondence between a card operation gesture and a card adjustment policy; and determining the size adjustment policy corresponding to the first application card based on the first slide operation gesture triggered by the user on the first application card and the operation-policy correspondence.

The operation-policy correspondence may include a correspondence between a slide operation gesture and a card adjustment policy, or may include a correspondence between a press operation gesture and a card adjustment policy, or may include a correspondence between another operation gesture and a card adjustment policy.

Specifically, the correspondence between the slide operation gesture and the card adjustment policy may further include card adjustment policies corresponding to different slide operation gestures. For example, a card adjustment policy corresponding to the first slide operation gesture is the size adjustment policy; a card adjustment policy corresponding to a second slide operation gesture is an application switching policy; and a card adjustment policy corresponding to a third slide operation gesture is a content editing policy. This is not limited in embodiments of this application.

As an example, before step 210 is performed, the operation-policy correspondence between the first slide operation gesture and the size adjustment policy may be preset and stored in a server corresponding to an application client. During actual application, if the first slide operation gesture initiated by the user on the first application card using a finger or a stylus is detected in the current display interface, the size adjustment policy of the first application card is determined based on the preset operation-policy correspondence.

In this case, by presetting the operation-policy correspondence, during actual application, a card adjustment requirement of the user can be accurately determined, and the size adjustment policy of the first application card can be quickly obtained, to quickly respond to a user operation, making user experience better.

Step 220: Determine a target display size of the first application card based on a current display size of the first application card and the size adjustment policy.

The first application card may provide one or more display sizes. If one display size is provided, the target display size determined in step 220 is the same as the current display size. If a plurality of display sizes are provided, the target display size may be different from the current display size.

It is to be noted that, the display size of the first application card may be represented by a pixel value. For example, the display size of the first application card may be 600 px long and 100 px wide, 976 px long and 440 px wide, or 1200 px long and 640 px wide, which is not listed herein.

When implementing step 220, in response to the first slide operation gesture triggered by the user on the first application card, the terminal device may determine the target display size through size switching based on the current display size and a plurality of display sizes preset for the first application card; or may determine the target display size by first presenting display effects of the first application card at a plurality of display sizes in a global preview manner; or may directly adjust the current display size of the first application card to the target display size.

It should be understood that a manner of determining the target display size is not unique, and may be one or more of the foregoing listed manners or may be another manner. This is not limited in embodiments of this application.

The following describes in detail the three listed implementations of determining the target display size.

In an exemplary embodiment, as shown in FIG. 3, an implementation process of determining the target display size in step 220 may include the following steps:

Step 310: Obtain a display size switching sequence of the first application card.

The display size switching sequence may include switching based on display sizes in ascending order or switching based on display sizes in descending order.

In step 310, the display size switching sequence may be pre-stored in a server corresponding to a first application client, or may be stored in a terminal device with a first application installed, or may be stored in another third-party device or system. This is not limited in embodiments of this application.

Specifically, after the user triggers the first slide operation gesture on the first application card, the terminal device obtains the display size switching sequence of the first application card from a local database or a remote database based on the size adjustment policy corresponding to the first slide operation gesture, and performs step 320.

Step 320: Determine the target display size of the first application card based on the current display size of the first application card and the display size switching sequence.

It is to be noted that, after obtaining the display size switching sequence of the first application card, the terminal device may determine the target display size in response to a further operation gesture of the user; or the terminal device may automatically determine the target display size of the first application card based on a preset size determining logic.

In a possible implementation, an implementation process of step 320 may include: determining an intermediate display size of the first application card in response to the first slide operation gesture triggered by the user on the first application card and the display size switching sequence, and displaying the first application card at the intermediate size; and determining the intermediate display size as the target display size of the first application card if a size determining operation triggered by the user is detected on the first application card displayed at the intermediate display size.

In other words, in response to the first slide operation gesture triggered by the user on the first application card, a display size switching operation is performed based on the display size switching sequence of the first application card, to display the first application card at the intermediate display size after switching.

It is to be noted that, when the first switching operation is performed, the intermediate display size may be a display size that is adjacent to the current display size and that is in the display size switching sequence; and when the user continues to trigger the first slide operation gesture on the first application card, in the display size switching sequence, there is a display size between the intermediate display size and the current display size. The rest can be done in the same manner, and details are not described herein again.

Further, if the user triggers the size determining operation on the first application card displayed at the intermediate display size, the intermediate display size is determined as the target display size of the first application card. In other words, each time displaying the first application card at the intermediate display size, the terminal device detects whether there is a size determining operation on the first application card, and then determines the target display size of the first application card based on the size determining operation of the user.

Optionally, if the size determining operation is not detected, within preset adjustment duration, on the first application card displayed at the intermediate display size, the current display size is determined as the target display size of the first application card. In this case, there is no need to adjust the current display size of the first application card.

Optionally, if the size determining operation is not detected, within preset adjustment duration, on the first application card displayed at the intermediate display size, the intermediate display size is automatically determined as the target display size of the first application card.

The adjustment duration may be any preset duration, such as 30 seconds, 1 minute, or 2 minutes. The size determining operation may be a tap operation.

In addition, a size determining button may be further pre-configured on the first application card. The user taps the determining button to determine a current display size of the first application card as the target display size.

Using an example in which the first slide operation gesture is an up slide operation, the first application card includes three display sizes: a display size A, a display size B, and a display size C, and the display size switching sequence is display size A-display size B-display size C. The display size A is smaller than the display size B, and the display size B is smaller than the display size C.

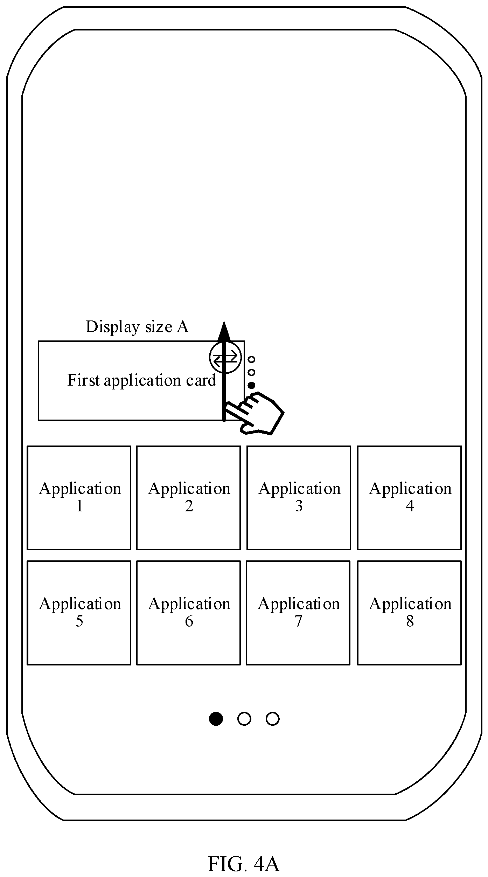

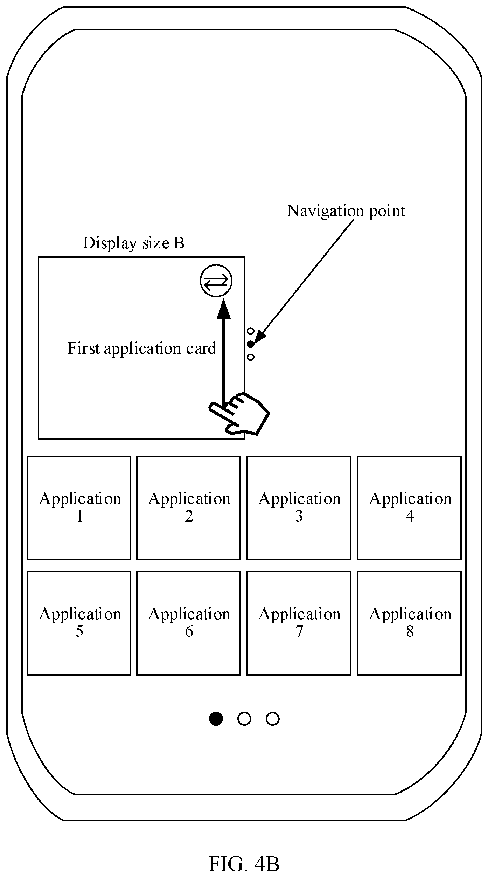

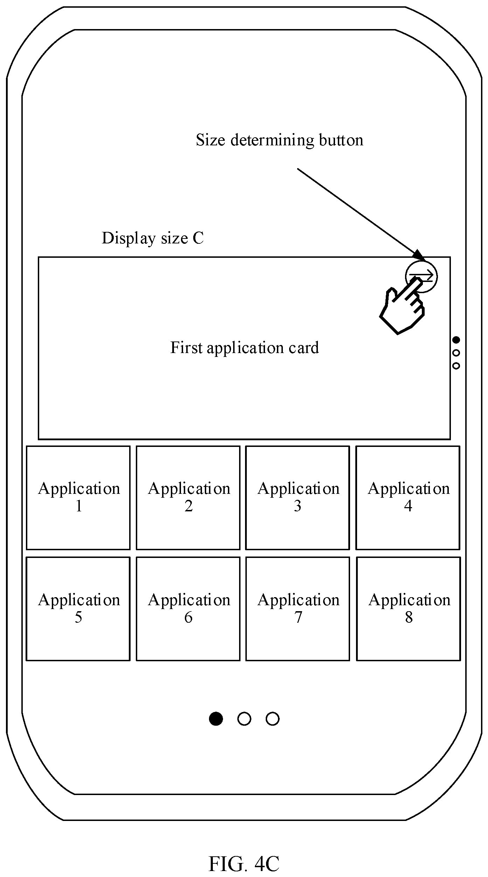

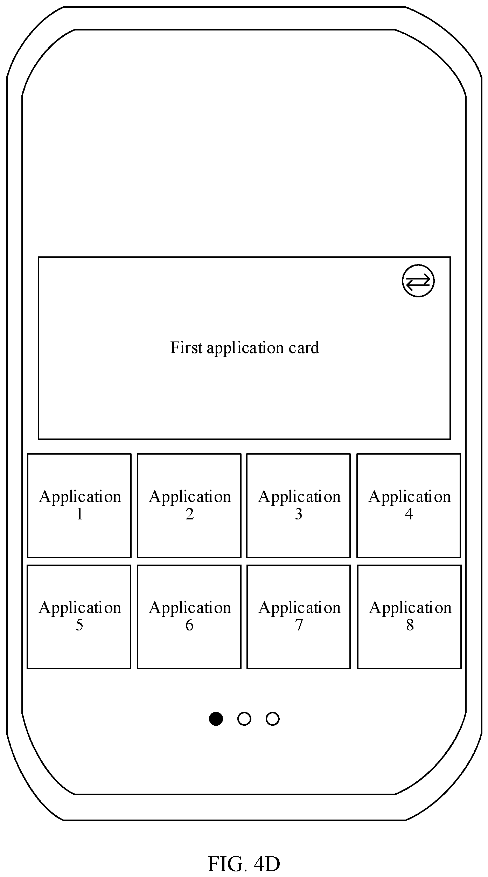

Refer to FIG. 4A, FIG. 4B, FIG. 4C, and FIG. 4D. As shown in FIG. 4A, the current display size is the display size A. After the user triggers an up slide operation on the first application card, the first application card is displayed at the display size B in the current display interface, as shown in FIG. 4B. The user continues to trigger an up slide operation (that is, the second up slide operation) on the first application card, and then the first application card is displayed at the display size C in the current display interface, as shown in FIG. 4C.

Further, as shown in FIG. 4C, a size determining button is configured on the first application card. After switching to the display size C through the up slide operation, the user taps the size determining button to determine the display size C as the target display size, and displays the first application card at the display size C, as shown in FIG. 4D.

Optionally, in a display size switching process, a navigation point is displayed on a side of the first application card to indicate the user that a currently switched display size is which display size in a plurality of display sizes preset for the first application card. It should be understood that a quantity of navigation points is the same as a quantity of display sizes preset for the first application card, and the navigation point is updated with each switch of the display size.

In the foregoing manner of determining the target display size, based on the display size switching sequence of the first application card, the display size of the first application card may be switched quickly in response to the first slide operation gesture of the user, to switch the current display size to the target display size. In this case, in a slide switching manner, in response to the first slide operation gesture of the user, the terminal device may quickly determine the target display size that the user needs to switch to, which has a simple operation. In addition, the user can visually understand a display effect of the first application card of each display size in a repeated switching manner, so that the target display size selected after switching meets an actual requirement of the user, and user operation experience is better.

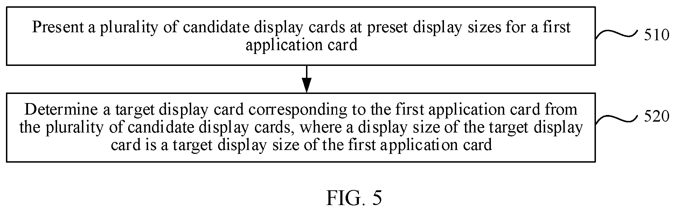

In another exemplary embodiment, as shown in FIG. 5, an implementation process of determining the target display size in step 220 may include the following steps:
Step 510: Present a plurality of candidate display cards at preset display sizes for the first application card.

A quantity of the plurality of preset display sizes is the same as a display quantity of the candidate display cards. For example, if three display sizes are preset for the first application card, there are three candidate display cards of the first application card.

In a possible implementation, an implementation process of step 510 may include: presenting the plurality of candidate display cards at the display sizes for the first application card based on the size adjustment policy of the first application card in response to the first slide operation gesture triggered by the user on the first application card in the current display interface.

Still using an example in which the first slide operation gesture is an up slide operation, the first application card includes three display sizes: a display size A, a display size B, and a display size C, and the display size switching sequence is display size A-display size B-display size C. The display size A is smaller than the display size B, and the display size B is smaller than the display size C.

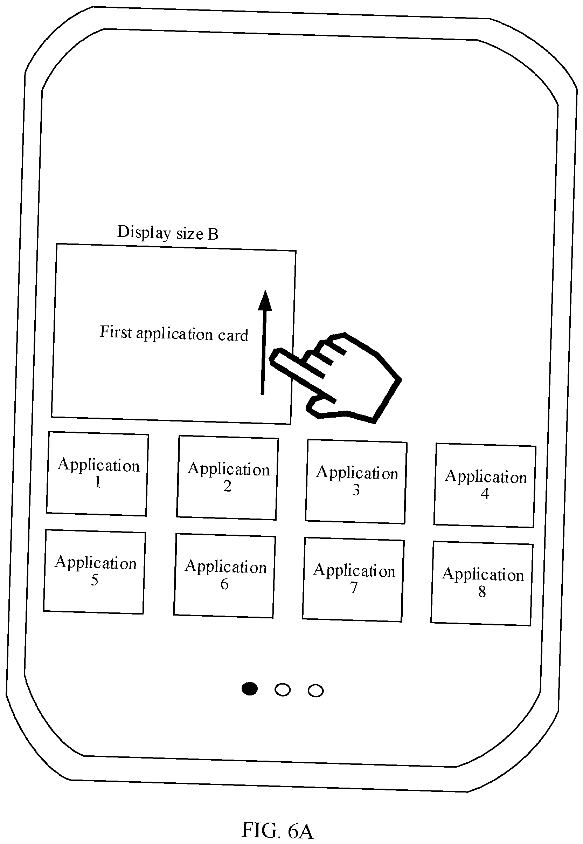

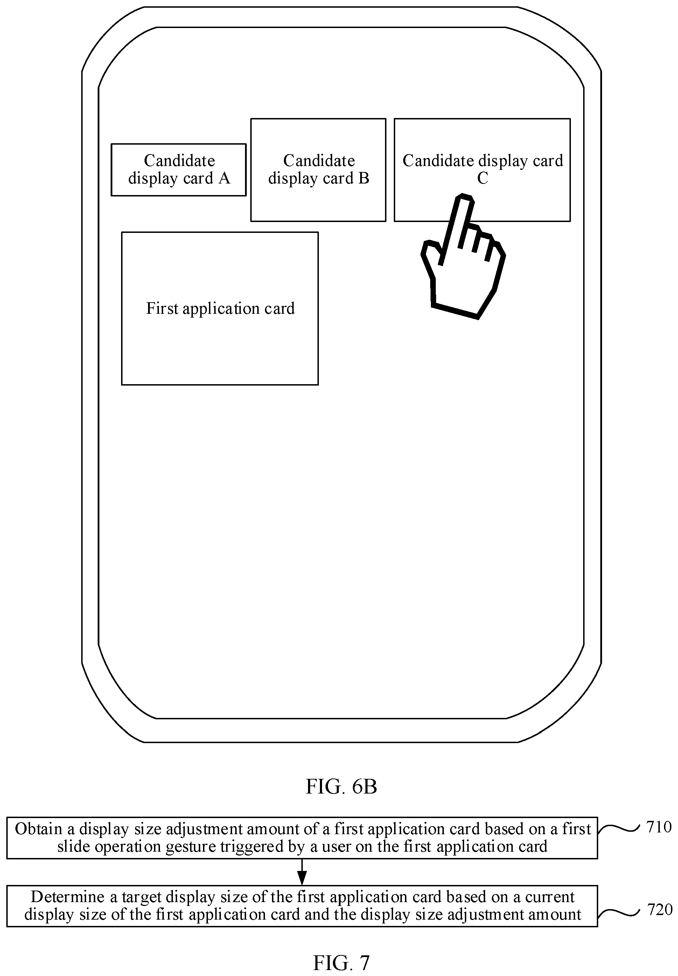

As shown in FIG. 6A, the current display interface includes the first application card displayed at the display size B, and application icons corresponding to an application 1 to an application 8. After the user triggers an up slide operation on the first application card, as shown in FIG. 6B, a plurality of candidate display cards are presented above the first application card in a horizontal arrangement on an upper layer of the current display interface.

The candidate display cards include a candidate display card A, a candidate display card B, and a candidate display card C. The candidate display card A is an effect of displaying the first application card at the display size A, the candidate display card B is an effect of displaying the first application card at the display size B, and the candidate display card C is an effect of displaying the first application card at the display size C.

In this case, the candidate display card is displayed on the upper layer of the current display interface, which can effectively prevent the user from mistakenly triggering another application icon or display card in the current display interface when selecting a target display card.

Optionally, the plurality of candidate display cards may alternatively be presented in an unoccupied display region in the current display interface, so that the user can select the target display size of the first application card based on a size of the unoccupied display region.

Optionally, the plurality of candidate display cards may alternatively be displayed in a vertical arrangement.

Optionally, the plurality of candidate display cards may alternatively be located below the first application card displayed at the current display size.

Step 520: Determine a target display card corresponding to the first application card from the plurality of candidate display cards, where a display size of the target display card is the target display size of the first application card.

In a possible implementation, in step 520, the target display size may be determined from the plurality of candidate display cards in any selection manner as follows:
(1) A display size of a candidate display card is determined as the target display size based on a tap operation triggered by the user on the candidate display card.
   The tap operation may be one tap or a plurality of consecutive taps. This is not limited in embodiments of this application.
(2) A display size of a candidate display card is determined as the target display size based on a third slide operation gesture triggered by the user on the candidate display card.

The third slide operation gesture may be the same as the first slide operation gesture, or may be different from the first slide operation gesture. This is not limited in embodiments of this application.

As an example, for the manners (1) and (2), as shown in FIG. 6B, if the user triggers the tap operation or the third slide operation gesture on the candidate display card C, the candidate display card C is determined as the target display card, and the display size C corresponding to the candidate display card C is the target display size.

(3) A display size of a target display card is determined as the target display size based on a voice instruction of the user.

The voice instruction carries card information of the target display card. After receiving the voice instruction, the terminal device determines the target display card from the plurality of candidate display cards, and determines the display size of the target display card as the target display size.

(4) Based on preset adjustment duration, if any operation triggered by the user is not detected on all the candidate display cards, the candidate display card corresponding to the current display size is determined as the target display card. In other words, there is no need to adjust the current display size, and the target display size of the first application card is the current display size.

As an example, as shown in FIG. 6B, if no operation is detected on the candidate display card A, the candidate display card B, and the candidate display card C, as the display size of the candidate display card B is the same as the current display size of the first application card, the candidate display card B is determined as the target display card. In this case, the target display size is the display size B.

It is to be noted that, this embodiment of this application is intended to emphasize a manner of simultaneously presenting the plurality of candidate display cards, but does not limit a manner of selecting the target display card or the target display size.

Further, after the target display card is determined in step 520, an implementation process of displaying the first application card at the target display size in the current display interface may include: switching the first application card to the target display card, to display the target application card in the current display interface.

In other words, the first application card is directly deleted from the current display interface, and the target display card is displayed in a corresponding card display region.

In the foregoing manner of determining the target display size, the plurality of candidate display cards at the preset display sizes for the first application card are presented in a global preview manner in response to the first slide operation gesture triggered by the user on the first application card, and then the target display card and the target display size are determined based on the plurality of candidate display cards. Therefore, a procedure of adjusting the display size of the first application card is simplified.

In addition, the plurality of candidate display cards are simultaneously presented, which facilitates the user to visually understand display effects of the first application card of different display sizes and comprehensively compare various display sizes, so that the selection of the target display size is more in line with a real thought of the user, effectively avoiding deviation between a selection result and an actual requirement, improving efficiency of browsing the display size of the first application card, and enhancing user operation experience.

In still another exemplary embodiment, as shown in FIG. 7, an implementation process of determining the target display size in step 220 may include the following steps:
Step 710: Obtain a display size adjustment amount of the first application card based on the first slide operation gesture triggered by the user on the first application card.

The first slide operation gesture includes a horizontal slide operation and/or a vertical slide operation, and correspondingly the display size adjustment amount includes a horizontal size adjustment amount and/or a vertical size adjustment amount.

In a possible implementation, an implementation process of step 710 may include: obtaining the horizontal size adjustment amount of the first application card based on the horizontal slide operation triggered by the user on the first application card; and/or obtaining the vertical size adjustment amount of the first application card based on the vertical slide operation triggered by the user on the first application card.

In other words, when triggering the first slide operation gesture on the first application card to directly adjust the current display size of the first application card, the user may only adjust a horizontal display size of the first application card based on the horizontal slide operation, or may only adjust a vertical display size of the first application card based on the vertical slide operation, or may sequentially perform the horizontal slide operation and the vertical slide operation on the first application card, to adjust a horizontal display size and a vertical display size of the first application card together.

In addition, in a specific implementation, a distance-adjustment amount correspondence between a unit slide distance and a unit size adjustment amount on a display screen may be preset to determine an actual slide distance of the user on the display screen based on the first slide adjustment gesture triggered by the user on the first application card, and then the display size adjustment amount of the first application card is calculated based on the actual slide distance and the distance-adjustment amount correspondence.

Step 720: Determine the target display size of the first application card based on the current display size of the first application card and the display size adjustment amount.

It is to be noted that, the user may reduce or increase the current display size of the first application card based on the first slide operation gesture. In this case, the display size adjustment amount may be a positive value or a negative value.

In a possible implementation, an implementation process of step 720 may include: using, if the display size adjustment amount is a positive value, a sum of the current display size and the display size adjustment amount as the target display size of the first application card; or using, if the display size adjustment amount is a negative value, a difference between the current display size and the display size adjustment amount as the target display size of the first application card.

Still using an example in which the first slide operation gesture is an up slide operation, the first application card includes three display sizes: a display size A, a display size B, and a display size C, and the display size switching sequence is display size A-display size B-display size C. The display size A is smaller than the display size B, and the display size B is smaller than the display size C.

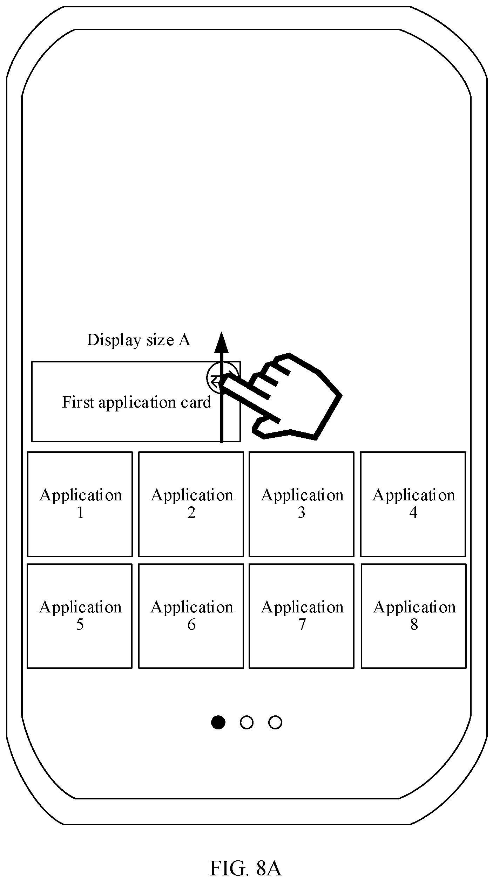

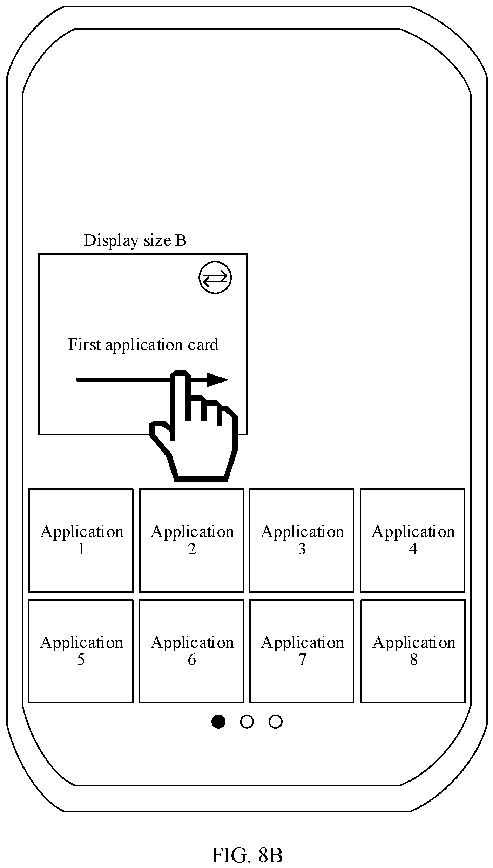

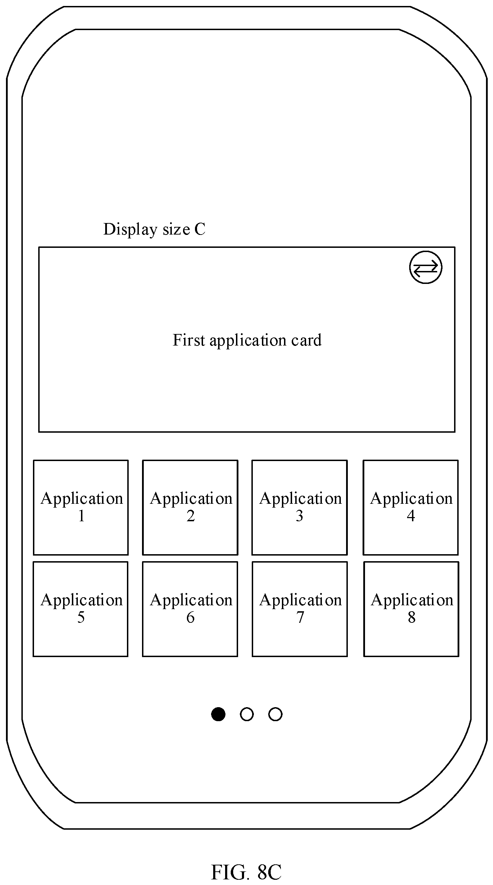

As shown in FIG. 8A, assuming that the current display size of the first application card is the display size A, in response to a vertical slide operation triggered by the user on the first application card, the current display size is adjusted based on a vertical size adjustment amount corresponding to the vertical slide operation, to obtain a display size shown in FIG. 8B. Further, in response to a horizontal slide operation triggered by the user on the first application card shown in FIG. 8B, the display size of the first application card continues to be adjusted based on a horizontal size adjustment amount corresponding to the horizontal slide operation, to obtain a target display size shown in FIG. 8C.

It should be understood that FIG. 8A, FIG. 8B, and FIG. 8C show only one adjustment sequence in this exemplary embodiment, and the horizontal display size of the first application card may be first adjusted, and the vertical display size may be then adjusted. This is not limited in this embodiment.

In the foregoing manner of determining the target display size, the display size adjustment amount of the first application card is determined in response to the first slide operation gesture triggered by the user on the first application card, to adaptively adjust the display size of the first application card to the target display size based on the current display size and the display size adjustment amount. Therefore, a procedure of adjusting the display size of the first application card is simplified. In addition, by adaptively adjusting the display size, the user can flexibly and effectively adjust the display size of the first application card based on an actual requirement, so that the adjusted target display size is in line with a real thought of the user, enhancing user operation experience.

Based on the method for determining the target display size provided in the embodiment of FIG. 7, when a plurality of display sizes are preset for the first application card, a slide distance corresponding to each display size may be preset, and whether to perform a display size switching operation is then determined based on an actual slide distance.

As an example, similarly, it is assumed that the first application card includes three display sizes: a display size A, a display size B, and a display size C, and the display size A is smaller than the display size B, and the display size B is smaller than the display size C.

In addition, assuming that the current display size of the first application card is the display size A, a correspondence between a display size and a slide distance may be shown in the following Table 1:

**Table 1**

| Display size | Slide distance/unit: mm |
|---|---|
| Display size A | [0, x1) |
| Display size B | [x1, x2) |
| Display size C | [x2, ∞) |

It can be learned that, when an actual slide distance generated based on the first slide operation gesture triggered by the user on the first application card is less than x1 mm, the current display size is kept unchanged, that is, the display size A is determined as the target display size; when an actual slide distance generated based on the first slide operation gesture triggered by the user on the first application card is greater than or equal to x1 mm, and the actual slide distance is less than x2 mm, the display size B is determined as the target display size; or when an actual slide distance generated based on the first slide operation gesture triggered by the user on the first application card is greater than or equal to x2 mm, the display size C is determined as the target display size.

It is to be noted that, when an actual slide distance generated based on the first slide operation gesture triggered by the user on the first application card is greater than a slide distance corresponding to a maximum display size preset for the first application card, continuous triggering of the first slide operation gesture no longer changes the display size of the first application card.

In addition, based on the foregoing three manners of determining the target display size, during actual application, a display size of any application card in the terminal device may be adjusted in the following manners:
Manner 1: A size adjustment policy is set for a first slide operation gesture.

As an example, setting the size adjustment policy of the first application card for the first slide operation gesture may be the display size switching manner shown in the embodiment of FIG. 3; or setting the size adjustment policy of the first application card may be the display size global preview manner shown in the embodiment of FIG. 5; or setting the size adjustment policy of the first application card may be the display size adaptive adjustment manner shown in FIG. 7.

In this case, an adjustment policy of a display size for each application card is unique.

Manner 2: A corresponding first slide operation gesture is set for each size adjustment policy.

As an example, if the first slide operation gesture is a vertical slide operation including an up slide operation or a down slide operation, setting the size adjustment policy of the first application card may be the display size switching manner shown in the embodiment of FIG. 3; or if the first slide operation gesture is a long press and slide operation, setting the size adjustment policy of the first application card may be the display size global preview manner shown in the embodiment of FIG. 5; or if the first slide operation gesture is a horizontal slide operation including a left slide operation or a right slide operation, setting the size adjustment policy of the first application card may be the display size adaptive adjustment manner shown in FIG. 7.

In this case, each application card may correspond to various display size adjustment manners, and a current display size of an application card may be adjusted based on different adjustment policies for different first slide operation gestures.

Step 230: Display the first application card at the target display size in the current display interface.

It is to be noted that, if the target display size is smaller than the current display size of the first application card, the first application card is directly displayed at the target display size in the current display interface, which does not affect an application icon in the current display interface, and does not need to adjust the application icon in the current display interface. If the target display size is larger than the current display size of the first application card, when the first application card is displayed at the target display size in the current display interface, there is a need to adjust an application icon in the current display interface, to avoid the case in which icons cover each other or the card covers icons.

It should be understood that, for ease of description above, there is no application icon configured after the first application card in FIG. 4A, FIG. 4B, FIG. 4C, FIG. 4D, FIG. 6A, FIG. 6B, FIG. 8A, FIG. 8B, and FIG. 8C, but a display position and a display sequence of the application icon and the application card are not limited.

In an actual case, an application icon may be deployed after the first application card, to ensure tidiness of the display desktop. In this case, if the target display size is larger than the current display size, when the first application card is displayed at the target display size, the application icons after and below the first application card need to be adjusted to avoid occlusion.

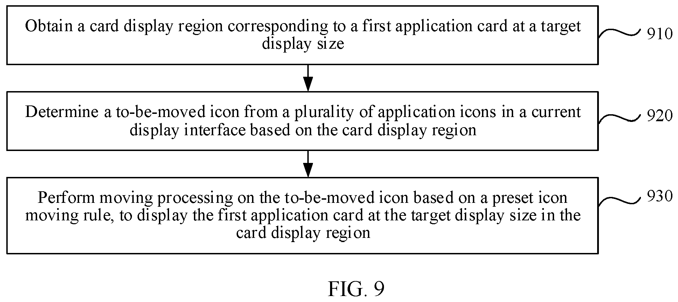

Therefore, for the case in which the current display size of the first application card is smaller than the target display size, in an exemplary embodiment, as shown in FIG. 9, an implementation process of step 230 may include the following substeps:
Step 910: Obtain a card display region corresponding to the first application card at the target display size.

The card display region may be a display region range corresponding to the target display size, or may be a display region range that needs to be extended based on a display region range corresponding to the current display size of the first application card when the first application card is displayed at the target display size.

Further, if the card display region is an extended display region, the extended display region may be determined based on a difference between the target display size and the current display size.

Step 920: Determine a to-be-moved icon from a plurality of application icons in the current display interface based on the card display region.

The to-be-moved icon may be some or all of application icons in the current display interface. This is not limited in this embodiment.

As an example, the to-be-moved icon may include a first movable icon and a second movable icon. The first movable icon is an application icon corresponding to the card display region, and the second movable icon includes at least one application icon other than the first movable icon in the current display interface.

It is to be noted that, the second movable icon may be determined based on a preset computer algorithm, or may be autonomously selected by the user, or may be all icons other than the first movable icon. This is not limited in this embodiment.

As another example, the to-be-moved icon includes a third movable icon, and the third movable icon includes a plurality of application icons below and after the card display region in the current display interface.

In this case, when the first application card is displayed at the target display size, positions of the application icons after and below the first application card need to be adjusted to avoid being covered by the first application card displayed at the target display size.

Step 930: Perform moving processing on the to-be-moved icon based on a preset icon moving rule, to display the first application card at the target display size in the card display region.

Moving processing may be performed on the to-be-moved icon by adding a display interface; or moving processing may be performed on the to-be-moved icon directly in at least one display interface that already exists on the terminal device.

In a possible implementation, if the to-be-moved icon includes the first movable icon and the second movable icon, an implementation process of step 930 may include: adding a blank display interface between the current display interface and a next display interface; and moving the first movable icon or the second movable icon to the blank display interface for display.

The current display interface and the next display interface are adjacent display interfaces.

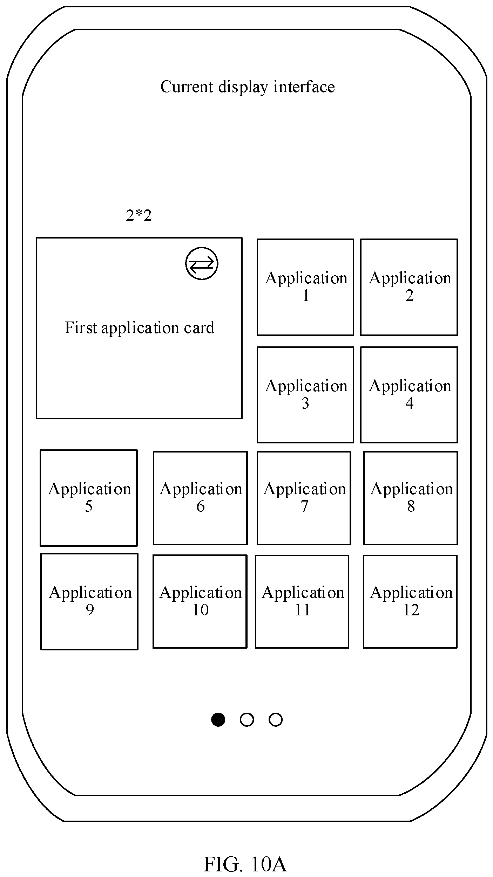

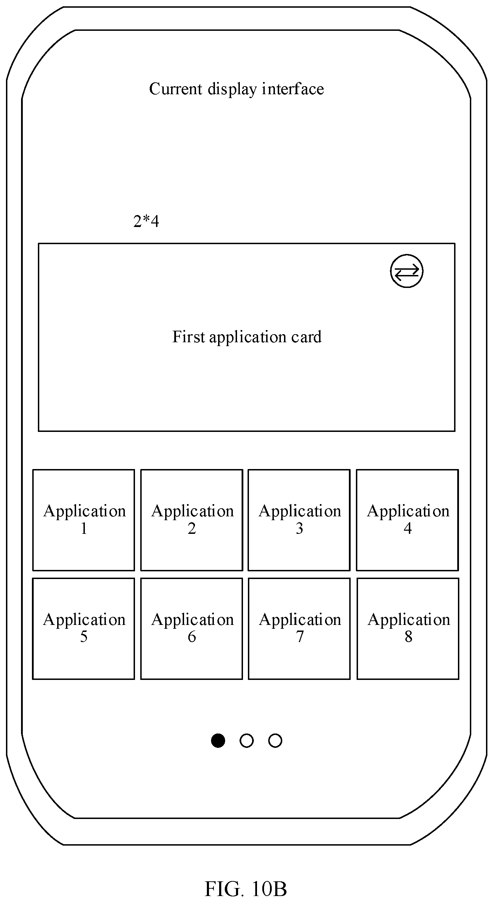

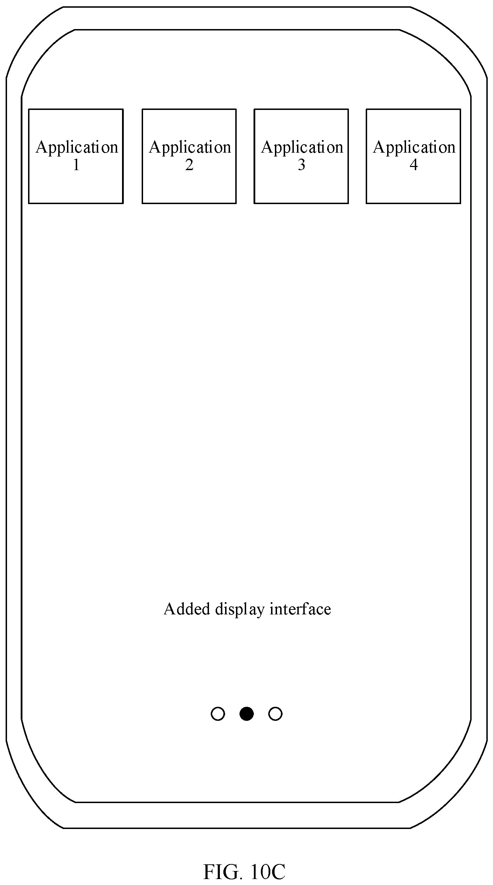

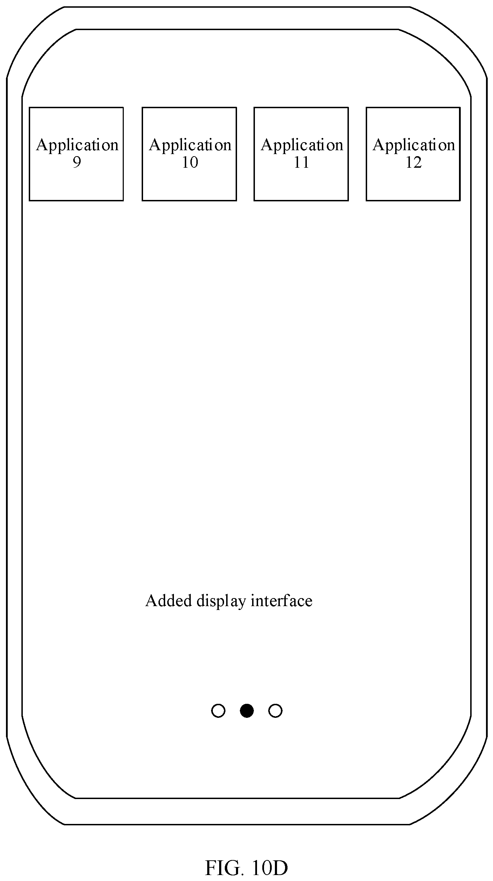

As an example, as shown in FIG. 10A, FIG. 10B, FIG. 10C, and FIG. 10D, the current display interface includes the first application card and application icons corresponding to an application 1 to an application 12.

As shown in FIG. 10A, a current display size of the first application card is 2*2 (that is, positions of two application icons are occupied in a horizontal direction, and positions of two icons are occupied in a vertical direction). When a target display size is adjusted to 2*4 (that is, positions of four application icons are occupied in the horizontal direction, and positions of two icons are occupied in the vertical direction), as shown in FIG. 10B, after the first application card is displayed at the target display size, display positions of the application icons after and/or below the first application card need to be adjusted.

The first movable icon includes the application icons corresponding to the application 1, the application 2, the application 3, and the application 4. The second movable icon includes the application icons corresponding to the application 9, the application 10, the application 11, and the application 12.

Specifically, a blank display interface is added between a current display interface and a next display interface (not shown), the first movable icon is moved to the added blank display interface for display, and display positions of other application icons in the current display interface are unchanged, as shown in FIG. 10C.

Alternatively, the application icons in the current display interface are sequentially moved backward, the application icons corresponding to the application 9 to the application 12 that cannot continue to be displayed in the current display interface are determined as the second movable icon, and then the second movable icon is moved to the added blank display interface for display, as shown in FIG. 10D. In this case, the application icons corresponding to the application 1 to the application 8 are sequentially displayed below the first application card in the current display interface.

It is to be noted that, the moving processing only changes the display position of the to-be-moved icon, but does not change the display sequence of the to-be-moved icons.

In this case, the to-be-moved icon is displayed by adding a display interface, which does not affect a display sequence of application icons in other display interfaces in the terminal device, and has a simple operation. In addition, original application icon deployment habits of the user in other display interfaces are maintained, making user experience better.

In another possible implementation, if the to-be-moved icon includes the third movable icon, an implementation process of step 930 may include: sequentially moving the third movable icon backward based on a preset moving direction priority, to display the third movable icon in the current display interface and/or a next display interface.

The moving direction priority indicates that a horizontal movement priority is higher than a vertical movement priority. To be specific, the third movable icon is first moved horizontally in a current row. In a horizontal moving process, if there is at least one third application icon that exceeds the current display interface, the third movable icon that exceeds the current display interface is vertically moved for display in a next row, and so on.

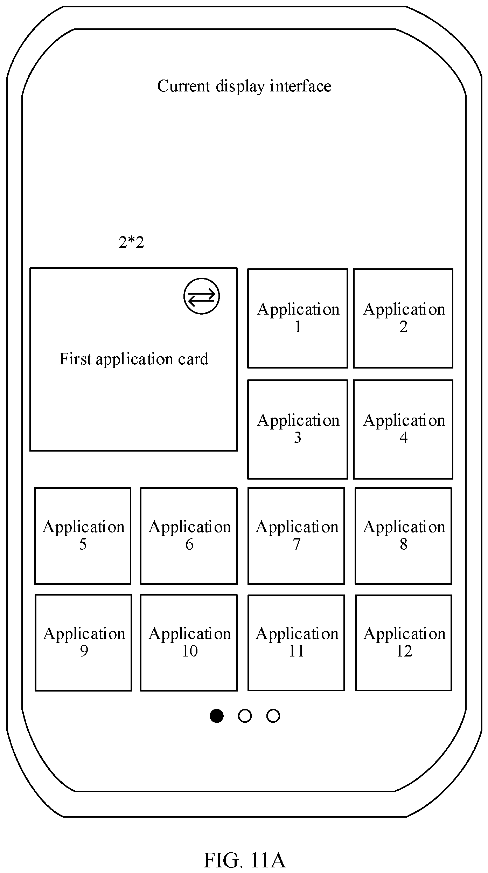

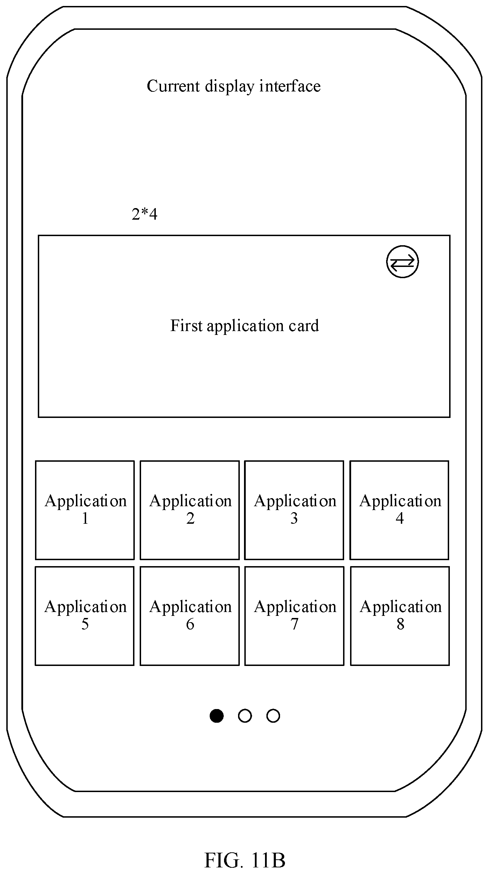

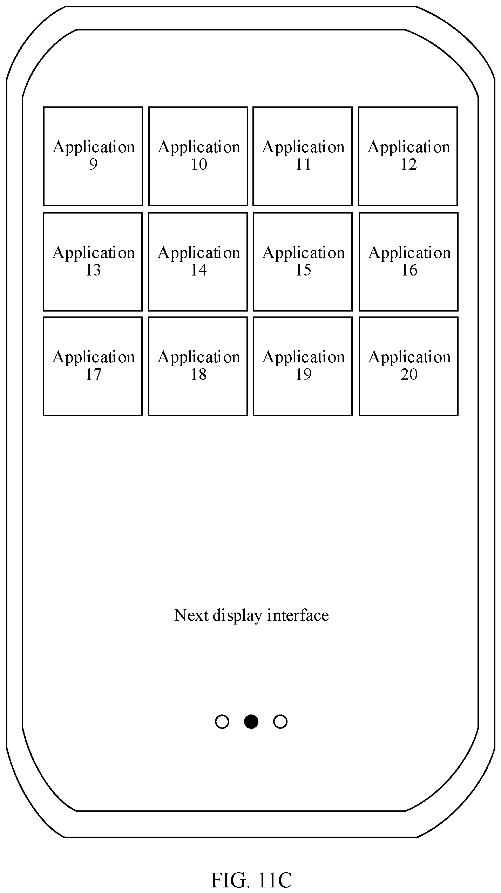

As an example, as shown in FIG. 11A, FIG. 11B, and FIG. 11C, the current display interface includes the first application card and application icons corresponding to an application 1 to an application 12, and the next display interface includes application icons corresponding to an application 13 to an application 20.

As shown in FIG. 11A, a current display size of the first application card is 2*2 (that is, positions of two application icons are occupied in a horizontal direction, and positions of two icons are occupied in a vertical direction). When a target display size is adjusted to 2*4 (that is, positions of four application icons are occupied in the horizontal direction, and positions of two icons are occupied in the vertical direction), after the first application card is displayed at the target display size, display positions of the application icons after and/or below the first application card need to be adjusted.

The third movable icon includes the application icons corresponding to the application 1 to the application 12 after and below the first application card in the current display interface.

Specifically, the application icons corresponding to the application 1 to the application 12 are sequentially moved backward in a sequence of first horizontally moving and then vertically moving. Finally, the application icons corresponding to the application 1 to the application 8 are displayed in the current display interface, as shown in FIG. 11B; and the application icons corresponding to the application 9 to the application 20 are displayed in the next display interface, as shown in FIG. 11C.

Similarly, the moving processing only changes the display position of the to-be-moved icon, but does not change the display sequence of the to-be-moved icons.

In this case, the to-be-moved icon is displayed by sequentially moving the application icons backward, so that the application icons in the terminal device are still neatly displayed in an unchanged display sequence after the display size of the first application card is adjusted, which is in line with an original application icon browsing habit of the user.

In still another possible implementation, if the to-be-moved icon includes the first movable icon and the second movable icon, an implementation process of step 930 may include: performing grouping processing on the second movable icon in a combination manner of the first movable icon, to obtain at least one second movable icon group; and moving the first movable icon and each second movable icon group backward based on a preset moving direction priority, to display the to-be-moved icon in the current display interface and a next display interface.

The first movable icon and each second movable icon group have the same backward moving sequence, that is, the first movable icon and each movable icon group are simultaneously moved backward.

As an example, it is also assumed that the current display interface includes the first application card and application icons corresponding to an application 1 to an application 12, and the next display interface includes application icons corresponding to an application 13 to an application 20.

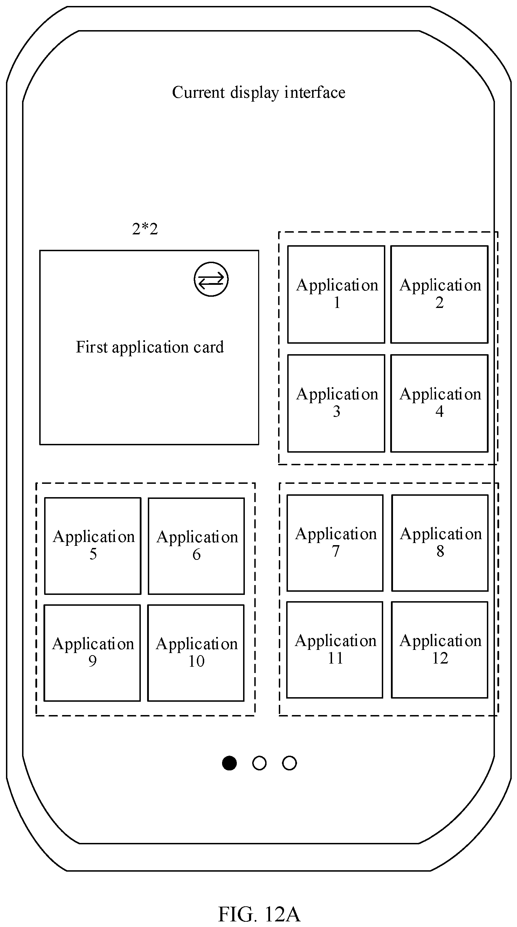

As shown in FIG. 12A, a current display size of the first application card is 2*2 (that is, positions of two application icons are occupied in a horizontal direction, and positions of two icons are occupied in a vertical direction). When a target display size is adjusted to 2*4 (that is, positions of four application icons are occupied in the horizontal direction, and positions of two icons are occupied in the vertical direction), the first movable icon includes the application icons corresponding to the application 1, the application 2, the application 3, and the application 4, and the second movable icon includes the application icons corresponding to the application 5 to the application 12.

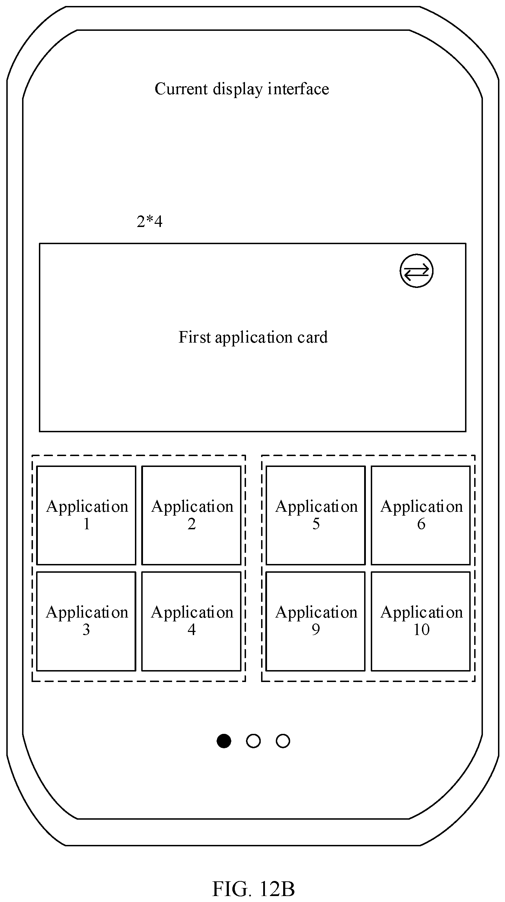

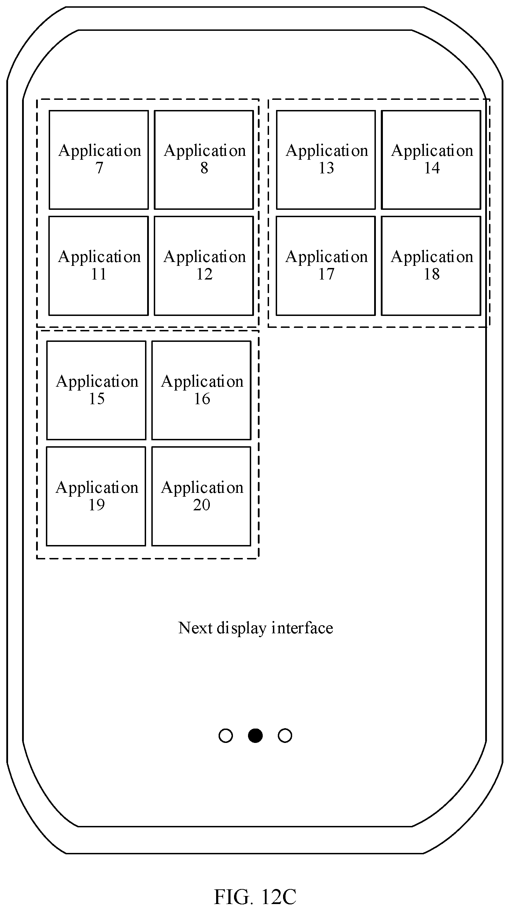

The first movable icon is moved backward as a whole to display the first movable icon in the current display interface, as shown in FIG. 12B. As the first movable icon includes four application icons, four application icons are grouped based on an original display position of the second movable icon, the application icons corresponding to the application 5, the application 6, the application 9, and the application 10 are grouped into a second movable icon group, and the application icons corresponding to the application 7, the application 8, the application 11, and the application 12 are grouped into another second movable icon group. Then, as shown in FIG. 12B, the second movable icon group including the application icons corresponding to the application 5, the application 6, the application 9, and the application 10 is moved backward for display after the first application icon in the current display interface. At the same time, the second movable icon group including the application icons corresponding to the application 7, the application 8, the application 11, and the application 12 is displayed in the next display interface, as shown in FIG. 12C.

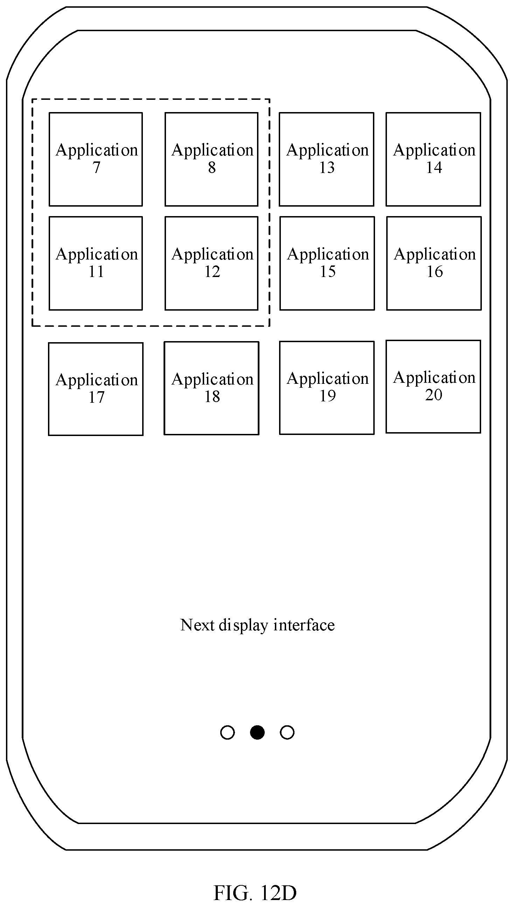

Specifically, the application icons corresponding to the application 13 to the application 20 may be classified in the grouping manner of the second movable icon and then moved backward as a whole, for display in the next display interface, as shown in FIG. 12C. Alternatively, the application icons corresponding to the application 13 to the application 20 may be sequentially moved backward based on a preset moving direction priority, for display in the next display interface, as shown in FIG. 12D. This is not limited in this embodiment.

It is to be noted that, in this implementation, the moving processing not only changes the display position of the to-be-moved icon, but also changes the display sequence of the to-be-moved icons. Specifically, a display sequence of some application icons in the second movable icon is changed.

In addition, if the current display interface further includes another application card and the application card is located below or after the first application card, there is a need to perform moving processing on the application card and the application icon in the current display interface, with an implementation principle similar to the foregoing three implementation manners. Details are not described herein again.

In this case, the to-be-moved icon is displayed by moving the application icons in groups backward, so that a display sequence of some icons is kept unchanged, which facilitates the user to quickly find a group of application icons displayed in the same region.

Optionally, in step 930, to further reduce an application icon movement amount, merging processing may be performed on the first application icon for display as a combined icon. Specifically, the combined icon may be displayed after the last application icon in the current display interface, or may be displayed before the first application icon or after the last application icon in the next display interface.

In the application card adjustment method provided in embodiments of this application, the terminal device obtains, in response to a first slide operation gesture triggered by a user on a first application card in a current display interface, a size adjustment policy of the first application card; then determines a target display size of the first application card based on a current display size of the first application card and the size adjustment policy; and displays the first application card at the target display size in the current display interface. Based on this, in this application, when a display size of an application card is adjusted, without triggering a menu button and sequentially selecting an application and a display size of an application card in a menu content display interface, a first slide operation gesture is directly triggered on an application card to indicate a terminal device to obtain a size adjustment policy corresponding to the application card based on the first slide operation gesture and automatically adjust a display size of the application card based on a current display size of the application card and the size adjustment policy. Therefore, a procedure of adjusting the display size of the application card is simplified, and efficiency of adjusting the display size of the application card is improved, so that user operation experience is better.

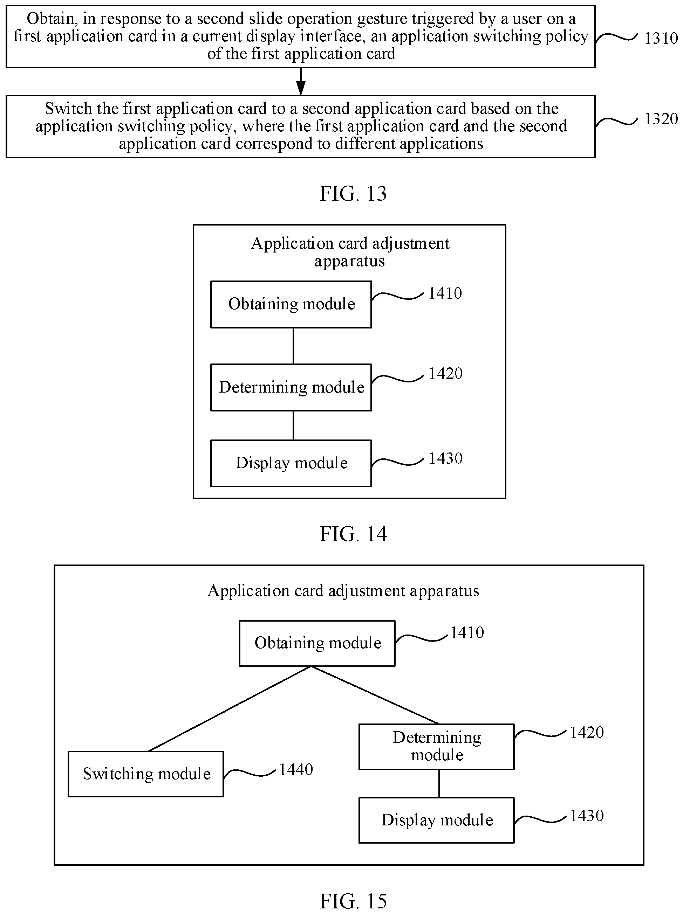

Based on the same technical concept as the foregoing method embodiments, in another method embodiment, as shown in FIG. 13, this application further provides another application card adjustment method to switch an application type of the first application card. The method is also applicable to the terminal device shown in FIG. 1, and includes the following steps:
Step 1310: Obtain, in response to a second slide operation gesture triggered by the user on the first application card in the current display interface, an application switching policy of the first application card.

The second slide operation gesture is different from the first slide operation gesture. It should be understood that the first slide operation gesture is for starting a procedure of adjusting the display size of the first application card, and the second slide operation gesture is for starting a procedure of switching the application type of the first application card.

Further, the application switching policy includes a plurality of application cards and a switching sequence of the plurality of application cards. The plurality of application cards include the first application card and at least one second application card, and the application cards correspond to different applications.

It is to be noted that, a switching policy of the first application card and a switching policy of the second application card may be the same or may be different; and switching policies of different application cards represent switching sequences of application types with the application cards as starting application cards.

As an example, an application switching policy of an application card I may include the application card I, an application card II, an application card III, and an application card IV, and a switching sequence of the application cards is "application card I-application card II-application card III-application card IV"; and an application switching policy of the application card II may include the application card II, the application card III, and the application card, and a switching sequence of the application cards is "application card II-application card III-application card IV".

Step 1320: Switch the first application card to a second application card based on the application switching policy, where the first application card and the second application card correspond to different applications.

In a possible implementation, an implementation process of step 1320 may include: determining, based on a switching sequence of a plurality of application cards in the application switching policy, the second application card located after the first application card; and replacing the first application card in the current display interface with the second application card, to display the second application card in the current display interface.

A card display region of the first application card in the current display interface is the same as a card display region of the second application card in the current display interface. Specifically, the first application card is deleted from the current display interface, and the second application card is displayed in the card display region corresponding to the first application card.

It is to be noted that, if a preset display size of the first application card and a preset display size of the second application card are different, after switching to the second application card, the second application card is displayed at a minimum display size, to avoid moving processing on another application card or application icon in the current display interface.

In addition, based on the foregoing application card switching policy, if the current display size of the first application card is a maximum preset display size or a minimum preset display size, switching of the application card may be triggered based on the first slide operation gesture.

In a possible implementation, in response to the first slide operation gesture triggered by the user on the first application card in the current display interface, an application switching policy of the first application card is obtained; and the first application card is switched to a second application card based on the application switching policy, where the first application card and the second application card correspond to different applications.

To be specific, when the user adjusts the current display size of the first application card by triggering the first slide operation gesture on the first application card, if the current display size or the adjusted target display size of the first application card is equal to the maximum preset display size or the minimum preset display size, the user no longer performs a display size switching operation after triggering the first slide operation gesture, but switches the first application card to the second application card based on the application switching policy.

In the application card adjustment method provided in embodiments of this application, the terminal device obtains, in response to a second slide operation gesture triggered by the user on the first application card in the current display interface, an application switching policy of the first application card; and then switches the first application card to a second application card based on the application switching policy. The first application card and the second application card correspond to different applications. Based on this, in this application, when an application type of an application card is adjusted, without triggering a menu button and selecting a second application for switching in a menu content display interface, the second slide operation gesture is directly triggered on the first application card to indicate the terminal device to obtain the application switching policy corresponding to the application card based on the second slide operation gesture and automatically switch the first application card to a second application card based on the application switching policy, to display the second application card in the current display interface. Therefore, a procedure of adjusting the application type of the application card is simplified, and efficiency of adjusting the application type of the application card is improved, so that user operation experience is better.

It should be understood that, although the steps are displayed sequentially according to the instructions of the arrows in the flowcharts of embodiments, these steps are not necessarily performed sequentially according to the sequence instructed by the arrows. Unless otherwise explicitly specified in this application, implementation of these steps is not strictly limited, and these steps may be implemented in other sequences. Moreover, at least some of the steps in the flowcharts of embodiments may include a plurality of steps or a plurality of stages. These steps or stages are not necessarily performed at the same moment but may be performed at different moments. These steps or stages are not necessarily sequentially performed, but may be performed alternately with other steps or at least some of steps or stages of other steps.

Based on the same technical concept, an embodiment of this application further provides an application card adjustment apparatus for implementing the application card adjustment method. Implementation solutions provided by the apparatus for resolving the technical problems are similar to the implementation solutions recorded in the foregoing method embodiments. Therefore, for specific functional limitations in one or more embodiments of the application card adjustment apparatus provided below, refer to the limitations on the relevant steps in the application card adjustment method above. Details are not described herein.

In an apparatus embodiment, as shown in FIG. 14, an embodiment of this application further provides an application card adjustment apparatus. The apparatus includes:
an obtaining module 1410, configured to obtain, in response to a first slide operation gesture triggered by a user on a first application card in a current display interface, a size adjustment policy of the first application card;
a determining module 1420, configured to determine a target display size of the first application card based on a current display size of the first application card and the size adjustment policy; and
a display module 1430, configured to display the first application card at the target display size in the current display interface.

In a possible implementation, the obtaining module 1410 includes:
a correspondence obtaining unit, configured to obtain an operation-policy correspondence between a card operation gesture and a card adjustment policy; and
a policy determining unit, configured to determine the size adjustment policy corresponding to the first application card based on the first slide operation gesture triggered by the user on the first application card and the operation-policy correspondence.

**In** a possible implementation, the determining module 1420 includes:
a switching sequence obtaining unit, configured to obtain a display size switching sequence of the first application card; and
a first determining unit, configured to determine the target display size of the first application card based on the current display size of the first application card and the display size switching sequence.

**In** a possible implementation, the first determining unit is specifically configured to:
determine an intermediate display size of the first application card in response to the first slide operation gesture triggered by the user on the first application card and the display size switching sequence, and display the first application card at the intermediate size; and
determine the intermediate display size as the target display size of the first application card if a size determining operation triggered by the user is detected on the first application card displayed at the intermediate display size.

In a possible implementation, the determining module 1420 includes:
a presentation unit, configured to present a plurality of candidate display cards at preset display sizes for the first application card; and
a second determining unit, configured to determine a target display card corresponding to the first application card from the plurality of candidate display cards, where a display size of the target display card is the target display size of the first application card.

In a possible implementation, the display module 1430 is specifically configured to:
switch the first application card to the target display card, to display the target application card in the current display interface.

In a possible implementation, the determining module 1420 includes:
an adjustment amount obtaining unit, configured to obtain a display size adjustment amount of the first application card based on the first slide operation gesture triggered by the user on the first application card; and
a third determining unit, configured to determine the target display size of the first application card based on the current display size of the first application card and the display size adjustment amount.

In a possible implementation, the first slide operation gesture includes a horizontal slide operation and/or a vertical slide operation, and the display size adjustment amount includes a horizontal size adjustment amount and/or a vertical size adjustment amount; and
the adjustment amount obtaining unit includes:
a first obtaining subunit, configured to obtain the horizontal size adjustment amount of the first application card based on the horizontal slide operation triggered by the user on the first application card;
   and/or
a second obtaining subunit, configured to obtain the vertical size adjustment amount of the first application card based on the vertical slide operation triggered by the user on the first application card.

In a possible implementation, the display module 1430 includes:
a region obtaining unit, configured to obtain a card display region corresponding to the first application card at the target display size;
a fourth determining unit, configured to determine a to-be-moved icon from a plurality of application icons in the current display interface based on the card display region; and
an icon processing unit, configured to perform moving processing on the to-be-moved icon based on a preset icon moving rule, to display the first application card at the target display size in the card display region.

In a possible implementation, the to-be-moved icon includes a first movable icon and a second movable icon; the first movable icon is an application icon corresponding to the card display region, and the second movable icon includes at least one application icon other than the first movable icon in the current display interface; and
the icon processing unit includes:
an interface addition subunit, configured to add a blank display interface between the current display interface and a next display interface, where the current display interface and the next display interface are adjacent display interfaces; and
a display subunit, configured to move the first movable icon or the second movable icon to the blank display interface for display.

In a possible implementation, the to-be-moved icon includes a third movable icon; the third movable icon includes a plurality of application icons located below and after the card display region in the current display interface; and
the icon processing unit includes:
an icon moving subunit, configured to sequentially move the third movable icon backward based on a preset moving direction priority, to display the third movable icon in the current display interface and/or a next display interface, where
the moving direction priority indicates that a horizontal movement priority is higher than a vertical movement priority.

In a possible implementation, as shown in FIG. 15, the apparatus further includes:
the obtaining module 1410, further configured to obtain, in response to a second slide operation gesture triggered by the user on the first application card in the current display interface, an application switching policy of the first application card; and
a switching module 1440, configured to switch the first application card to a second application card based on the application switching policy, where the first application card and the second application card correspond to different applications.

In a possible implementation, if the current display size of the first application card is a maximum preset display size or a minimum preset display size, in the apparatus:
the obtaining module 1410 is further configured to obtain, in response to the first slide operation gesture triggered by the user on the first application card in the current display interface, an application switching policy of the first application card; and
the switching module 1440 is further configured to switch the first application card to a second application card based on the application switching policy, where the first application card and the second application card correspond to different applications.

It is to be noted that, each module in the application card adjustment apparatus may be implemented entirely or partially by software, hardware, or a combination thereof. Each module may be embedded in or independent of a processor in a terminal device in a hardware form, or may be stored in a memory in a terminal device in a software form, to facilitate the processor to call the module to perform an operation corresponding to the module.

In addition, when the application card adjustment apparatus provided in the foregoing embodiments adjusts a display size and an application type of an application card, only division of the functional modules is used as an example for description. During practical application, the functions may be completed by different functional modules as required. In other words, an internal structure of the apparatus is divided into different functional modules to complete all or some of the functions described above.

In an exemplary embodiment, an embodiment of this application further provides a computer-readable storage medium, storing a computer program. When the computer program is executed by a processor of a terminal device, the application card adjustment method provided in the foregoing embodiments can be implemented.

In an exemplary embodiment, an embodiment of this application further provides a computer program product, including a computer program. When the computer program is executed by a processor of a terminal device, the application card adjustment method provided in the foregoing embodiments can be implemented.

The technical features of the foregoing embodiments can be randomly combined. To make the description concise, all possible combinations of the technical features in the foregoing embodiments have not been described. However, as long as there is no contradiction in the combinations of these technical features, the combinations have to be considered as the scope described in this specification.

The foregoing descriptions are merely specific implementations of embodiments of this application, but are not intended to limit the protection scope of embodiments of this application. Any modification, equivalent replacement, improvement, or the like made based on the technical solutions of embodiments of this application shall fall within the protection scope of embodiments of this application.

## Claims

1. An application card adjustment method, wherein the method comprises:
obtaining, in response to a first slide operation gesture triggered by a user on a first application card in a current display interface, a size adjustment policy of the first application card;
determining a target display size of the first application card based on a current display size of the first application card and the size adjustment policy; and
displaying the first application card at the target display size in the current display interface.

2. The method according to claim 1, wherein the obtaining, in response to a first slide operation gesture triggered by a user on a first application card in a current display interface, a size adjustment policy of the first application card comprises:
obtaining an operation-policy correspondence between a card operation gesture and a card adjustment policy; and
determining the size adjustment policy corresponding to the first application card based on the first slide operation gesture triggered by the user on the first application card and the operation-policy correspondence.

3. The method according to claim 1 or 2, wherein the determining a target display size of the first application card based on a current display size of the first application card and the size adjustment policy comprises:
obtaining a display size switching sequence of the first application card; and
determining the target display size of the first application card based on the current display size of the first application card and the display size switching sequence.

4. The method according to claim 3, wherein the determining the target display size of the first application card based on the current display size of the first application card and the display size switching sequence comprises:
determining an intermediate display size of the first application card in response to the first slide operation gesture triggered by the user on the first application card and the display size switching sequence, and displaying the first application card at the intermediate size; and
determining the intermediate display size as the target display size of the first application card if a size determining operation triggered by the user is detected on the first application card displayed at the intermediate display size.

5. The method according to claim 1 or 2, wherein the determining a target display size of the first application card based on a current display size of the first application card and the size adjustment policy comprises:
presenting a plurality of candidate display cards at preset display sizes for the first application card; and
determining a target display card corresponding to the first application card from the plurality of candidate display cards, wherein a display size of the target display card is the target display size of the first application card.

6. The method according to claim 5, wherein the displaying the first application card at the target display size in the current display interface comprises:
switching the first application card to the target display card, to display the target application card in the current display interface.

7. The method according to claim 1 or 2, wherein the determining a target display size of the first application card based on a current display size of the first application card and the size adjustment policy comprises:
obtaining a display size adjustment amount of the first application card based on the first slide operation gesture triggered by the user on the first application card; and
determining the target display size of the first application card based on the current display size of the first application card and the display size adjustment amount.

8. The method according to claim 7, wherein the first slide operation gesture comprises a horizontal slide operation and/or a vertical slide operation, and the display size adjustment amount comprises a horizontal size adjustment amount and/or a vertical size adjustment amount; and
the obtaining a display size adjustment amount of the first application card based on the first slide operation gesture triggered by the user on the first application card comprises:
obtaining the horizontal size adjustment amount of the first application card based on the horizontal slide operation triggered by the user on the first application card;
and/or
obtaining the vertical size adjustment amount of the first application card based on the vertical slide operation triggered by the user on the first application card.

9. The method according to claim 1 or 2, wherein the displaying the first application card at the target display size in the current display interface comprises:
obtaining a card display region corresponding to the first application card at the target display size;
determining a to-be-moved icon from a plurality of application icons in the current display interface based on the card display region; and
performing moving processing on the to-be-moved icon based on a preset icon moving rule, to display the first application card at the target display size in the card display region.

10. The method according to claim 9, wherein the to-be-moved icon comprises a first movable icon and a second movable icon; the first movable icon is an application icon corresponding to the card display region, and the second movable icon comprises at least one application icon other than the first movable icon in the current display interface; and
the performing moving processing on the to-be-moved icon based on a preset icon moving rule comprises:
adding a blank display interface between the current display interface and a next display interface, wherein the current display interface and the next display interface are adjacent display interfaces; and
moving the first movable icon or the second movable icon to the blank display interface for display.

11. The method according to claim 9, wherein the to-be-moved icon comprises a third movable icon; the third movable icon comprises a plurality of application icons located below and after the card display region in the current display interface; and
the performing moving processing on the to-be-moved icon based on a preset icon moving rule comprises:
sequentially moving the third movable icon backward based on a preset moving direction priority, to display the third movable icon in the current display interface and/or a next display interface, wherein
the moving direction priority indicates that a horizontal movement priority is higher than a vertical movement priority.

12. The method according to claim 1 or 2, wherein the method further comprises:
obtaining, in response to a second slide operation gesture triggered by the user on the first application card in the current display interface, an application switching policy of the first application card; and
switching the first application card to a second application card based on the application switching policy, wherein the first application card and the second application card correspond to different applications.

13. The method according to claim 1 or 2, wherein if the current display size of the first application card is a maximum preset display size or a minimum preset display size, the method further comprises:
obtaining, in response to the first slide operation gesture triggered by the user on the first application card in the current display interface, an application switching policy of the first application card; and
switching the first application card to a second application card based on the application switching policy, wherein the first application card and the second application card correspond to different applications.

14. An application card adjustment apparatus, wherein the apparatus comprises:
an obtaining module, configured to obtain, in response to a first slide operation gesture triggered by a user on a first application card in a current display interface, a size adjustment policy of the first application card;
a determining module, configured to determine a target display size of the first application card based on a current display size of the first application card and the size adjustment policy; and
a display module, configured to display the first application card at the target display size in the current display interface.

15. A terminal device, comprising a memory and a processor, wherein
the memory is configured to store a computer program; and
the processor is configured to read the computer program from the memory and execute the computer program to implement steps of the application card adjustment method according to any one of claims 1 to 13.

16. A computer-readable storage medium, wherein the storage medium stores a computer program, and the computer program is executed by a processor to implement steps of the application card adjustment method according to any one of claims 1 to 13.
